# FASCICULE DE BREVET EUROPEEN

(11) **EP 0 520 877 B1**
(45) Date de publication et mention de la délivrance du brevet: **10.01.1996**
(21) Numéro de dépôt: 92401757.7
(22) Date de dépôt: 23.06.1992
(51) Int. Cl.: H04L 12/40

(54) **Procédé et dispositif pour gérer des transmissions d'informations sur le réseau électrique, appliqués à un réseau domotique**
Verfahren und Vorrichtung zur Nachrichtenübertragungsverwaltung über ein Stromversorgungsnetz in einem Hausnetz
Method and device for managing information transmission over mains applied to a domestic network

(30) Priorité: 24.06.1991 FR 9107739
(43) Date de publication de la demande: 30.12.1992
(73) Titulaire: SGS THOMSON MICROELECTRONICS SA, F-94250 Gentilly (FR)
(72) Inventeur: Le Van Suu, Maurice, F-93230 Romainville (FR)
(74) Mandataire: Schmit, Christian Norbert Marie

(56) Documents cités:
- EP-A- 0 100 594
- EP-A- 0 217 571
- GB-A- 2 229 023
- WESCON TECHNICAL PAPERS. 30 Octobre 1984, NORTH HOLLYWOOD US pages 1 - 5; A. KINGSBURY: 'Small area networks for personal computers'

## Description

La présente invention concerne un procédé pour gérer des transmissions d'informations sur un circuit de distribution électrique.

Elle vise également un dispositif pour sa mise en oeuvre et l'application de ce procédé aux communications dans un système domotique.

La transmission d'informations par courants porteurs sur des circuits de distribution électrique domestiques suscite actuellement un regain d'intérêt dû au développement en cours des installations domotiques.

Dans un système de communication par courants porteurs tel qu'on peut le concevoir actuellement, des équipements électriques sont reliés à un circuit de distribution électrique secteur et peuvent être soit destinés à recevoir des commandes, soit dédiés à l'émission d'informations ou de commandes à destination d'équipements récepteurs. Les informations transmises sont généralement des informations numériques résultant d'un codage et d'un conditionnement d'un ensemble d'informations incluant une ou plusieurs adresses, des données et des informations de contrôle, le tout constituant une trame qui est injectée sur le secteur par modulation en fréquence ou bien en amplitude suivant des techniques bien connues. Avec les procédés actuels de transmission, de nombreuses difficultés apparaissent lorsque plusieurs équipements émetteurs sont connectés sur le circuit de distribution électrique en plusieurs points du circuit. En effet, sans précaution particulière, l'émission simultanée d'informations par deux émetteurs ou plus conduit à une collision des trames injectées et à une déformation des messages transmis, pouvant éventuellement induire des commandes intempestives et dans bien des cas conduire à une absence de transmission correcte d'informations. Ainsi, la fiabilité globale du procédé de communication se trouve sévèrement affectée du fait du risque potentiel de collision d'informations.

Dans le domaine de la gestion de la transmission d'informations sur un support de communication, on connaît déjà le principe de l'anneau à jeton largement diffusé dans les réseaux locaux de microordinateurs. Avec ce principe, à tout instant, un seul microordinateur a la possibilité d'émettre des informations sur le réseau à destination d'un ou plusieurs des autres microordinateurs reliés au réseau, et le "jeton" passe au microordinateur suivant au sein du réseau, qui devient le nouveau maître des transmissions d'informations sur le réseau. On a ainsi une gestion de collision de nature déterministe qui présente cependant l'inconvénient de conduire à un flux d'informations relativement modeste en regard des flux limites autorisés par les vitesses de transmission usuelles de ce type de transmission.

Il existe aussi dans le domaine des réseaux de communication, des procédés de détection de collision bit à bit conduisant généralement à des situations d'arbitrage entre émetteurs au cours desquelles les émetteurs impliqués dans la collision cessent d'émettre jusqu'à ce que le réseau soit libéré, les émetteurs étant par ailleurs soumis à un ordre de priorité prédéterminé.

Ces procédés de détection de collision bit à bit qui présentent l'inconvénient de ne pas optimiser les flux d'information en neutralisant systématiquement l'émission en cas de détection de collision ne sont pas applicables au cas d'une transmission sur un circuit de distribution électrique.

Le brevet britannique GB- A - 2 229 023 déposé au nom de CREDA LIMITED en date du 6 Mars 1989 divulgue un système de télécommande d'appareils électriques par courants porteurs sur un circuit de distribution électrique, ce système comprenant un processeur maître et un contrôleur de bus qui émettent à destination d'applications à distance des paquets de données. Un procédé pour éviter les collisions d'information est proposé avec pour caractéristique principale l'envoi par chaque appareil ayant reçu un paquet de données émis par le processeur d'un accusé de réception après un délai prédéterminé. Cependant, ce procédé ne met pas en oeuvre une détection de collision bit à bit et ne garantit pas qu'un message défaillant soit détecté sur le réseau.

Le brevet européen EP-A-0 100 594 déposé au nom de Plessey Overseas LTD en date du 15 juin 1983 décrit un système de réseau local informatique doté d'une gestion de transmission anti-collision mettant en oeuvre un signal de priorité constitué soit d'un nombre binaire indicatif d'une mesure du temps d'attente d'une station connectée au réseau, soit d'un nombre alloué à la station à cette fin, ou d'une combinaison de ces deux nombres. Ce type de gestion de collision ne prévoit pas d'écoute de l'écho renvoyé par la station destinatrice. En outre, un tel système ne peut être appliqué au domaine des courants porteurs.

La demande de brevet européen EP-A-0 216 571 déposée au nom de Ford France S.A., en date du 10 septembre 1986, décrit un système de réseau de communication automobile doté d'une gestion de transmission avec reconnaissance d'un champ de priorité en cas d'émission simultanée et synchrone de plusieurs modules reliés au réseau, le bus de transmission étant composé de deux fils reliés à des potentiels fixes. Il n'est pas prévu de moyens de gestion de collision, dans la mesure où il ne peut y avoir de collision mais simplement une superposition d'informations.

Le but de la présente invention est de remédier à ces inconvénients en proposant un procédé pour gérer des transmissions d'informations sur un circuit de distribution électrique, lesdites informations étant issues de plusieurs stations de communication reliées audit circuit de distribution électrique et étant émises par injection de courants porteurs sur ledit circuit de distribution électrique sous la forme d'une trame comprenant un nombre prédéterminé de bits.

Suivant l'invention, le procédé comprend une étape de détection de collision effectuée lors de l'émission de chaque bit de ladite trame et comportant une sous-étape de réception d'un bit reçu en écho au bit émis et une sous-étape de comparaison du bit reçu au bit émis, conduisant en cas de détection d'une collision à l'exécution d'une étape de gestion de collision au cours de laquelle les stations impliquées dans ladite collision sont placées en situation d'écoute d'une succession d'informations transmises sur le circuit de distribution électrique respectivement par les autres stations de communication suivant un ordre de priorité prédéterminé.

Ainsi, avec le procédé de gestion selon l'invention, on obtient par la combinaison d'un mode de gestion de priorité et d'une technique de détection de collision bit à bit, une utilisation meilleure du support d'informations en optimisant les flux d'informations émis par l'ensemble des stations de communication émettrices reliées au circuit de distribution électrique. De plus, la fiabilité des communications apportées par une détection de collision bit à bit est judicieusement accompagnée d'une amélioration du taux d'utilisation du support d'informations par rapport à l'art antérieur.

Selon une version préférée de l'invention, au cours de l'étape de gestion de collision, celle des autres stations qui est d'ordre de priorité immédiatement inférieur à celui de la station de communication en cours d'émission sur le circuit de distribution électrique, est soumise à une étape de temporisation de durée sensiblement égale à la durée de transmission d'une trame.

Ceci permet d'assurer au mieux une juxtaposition temporelle des trames nécessaires générées respectivement par les stations de communication selon l'ordre de priorité prédéterminé. La temporisation prévue évite que la station concernée provoque de façon intempestive une nouvelle situation de collision.

Selon une forme de réalisation avantageuse de l'invention, au cours de l'étape de gestion de collision, si une information émise par les autres stations de communication concerne l'une des deux stations impliquées dans la collision, cette station exécute les ordres ou commandes éventuellement inclus dans ladite information.

On contribue ainsi à faire de l'étape de gestion de collision non seulement une étape d'arbitrage et de contrôle des communications des différentes stations de communication mais aussi une séquence durant laquelle les stations de communication impliquées dans la collision et recevant des informations sont aptes à exécuter les ordres inclus dans ces informations sans devoir attendre la fin de l'étape de gestion de collision. Ceci contribue nécessairement à une meilleure efficacité du procédé de gestion.

En outre, au cours de l'étape de gestion de collision, les autres stations qui ne sont pas en cours d'émission sont mises en situation d'écoute des informations circulant sur le circuit de distribution électrique et exécutent les ordres ou commandes éventuellement inclus dans les informations qui leur sont adressées.

L'option précitée, qui visait les stations de communication impliquées dans la collision et qui concerne l'exécution par ces stations des commandes reçues au cours de l'étape de gestion de collision, est ainsi généralisée à l'ensemble des stations de communication.

Selon un autre aspect de l'invention, le dispositif pour gérer des transmission d'informations sur un circuit de distribution électrique, ces informations étant issues de plusieurs stations de communication reliées audit circuit de distribution électrique et étant émises par injection de courants porteurs sur ce dernier sous la forme de trames comprenant un nombre prédéterminé de bis émis séquentiellement, mettant en oeuvre le procédé selon l'invention, est caractérisé en ce qu'il comprend des moyens pour détecter une collision d'informations sur le circuit de distribution électrique, coopérant avec des moyens pour émettre sur le circuit des informations délivrées par des moyens de contrôle, les moyens de détection de collision comprenant des moyens pour recevoir chaque bit reçu en écho de l'émission d'un bit par les moyens d'émission et des moyens pour comparer ce bit reçu en écho avec le bit émis, et délivrant un signal de détection de collision en cas de différence, ce signal étant fourni aux moyens de contrôle en vue d'initier une étape de gestion de collision.

D'autres particularités et avantages de l'invention apparaîtront encore dans la description ci-après. Aux dessins annexés à titre d'exemples non limitatifs :
- la figure 1 est un schéma-bloc simplifié d'un module de commande de ligne intégrant le dispositif de gestion selon l'invention ;
- la figure 2 est un chronogramme illustrant les conséquences d'une collision d'informations dans le cas d'une modulation de fréquence de type FSK ;
- la figure 3 est un chronogramme illustrant les conséquences d'une collision d'informations dans le cas d'une modulation d'amplitude de type ASK ;
- la figure 4 est un schéma synoptique illustrant l'organisation hiérarchisée d'un procédé de communication incluant le procédé de gestion selon l'invention ;
- la figure 5 illustre la structure d'une trame générée dans un système de communication domotique ;
- la figure 6 est un organigramme d'une séquence d'écoute mise en oeuvre dans un procédé de communication ;
- la figure 7 est un organigramme d'une séquence d'émission élémentaire mise en oeuvre dans le procédé selon l'invention.

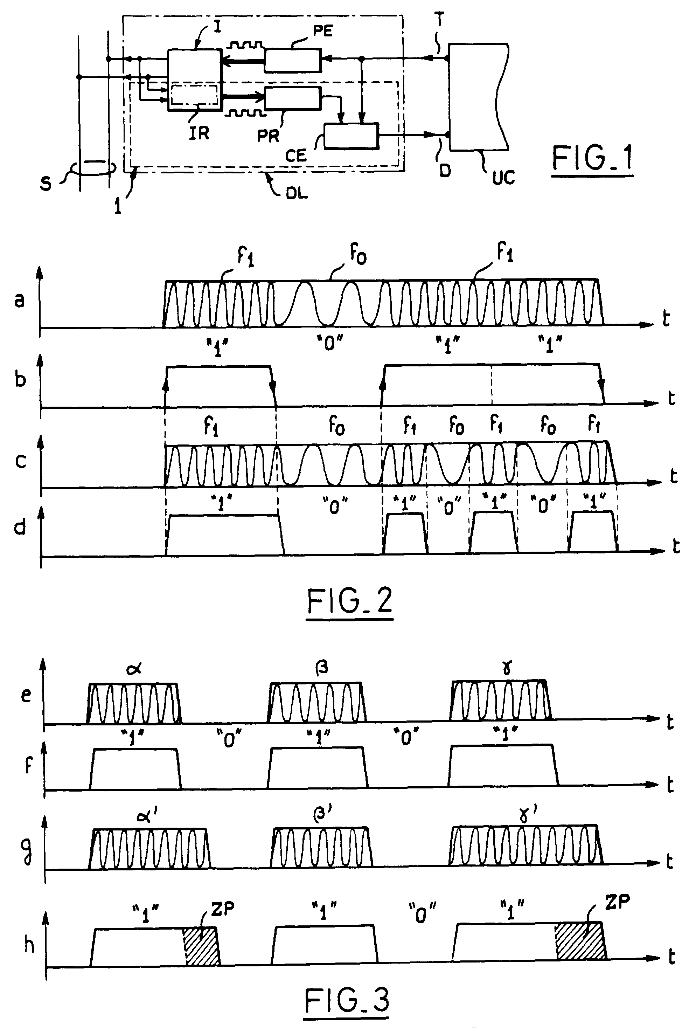

On va maintenant décrire une forme préférée de réalisation d'un dispositif de gestion selon l'invention en même temps que le procédé mis en oeuvre dans ce dispositif, en référence aux figures 1 à 7.

On considère, en référence à la figure 1, une unité de commande de ligne DL située en interface entre un circuit de distribution électrique S et une unité de contrôle de protocole de communication UC équipant une station de communication (non représentée) associée à un équipement électrique destiné à être commandé et à émettre des informations via le circuit de distribution électrique S. Une demande de brevet déposée conjointement à la présente demande vise précisément un procédé pour communiquer des informations entre plusieurs stations de communication via un circuit de distribution électrique, et un système pour sa mise en oeuvre qui inclut notamment pour chaque station de communication une unité de commande de ligne.

Dans la forme de réalisation de l'invention illustrée en figures, l'unité de commande de ligne DL comprend un module d'émission PE recevant une information àémettre en provenance de l'unité de contrôle de protocole UC et en assurant la mise en forme et le conditionnement, et une interface d'injection I reliée en aval au circuit de distribution électrique S, qui est par exemple un circuit monophasé secteur de tension efficace 220 V et de fréquence 50 ou 60 Hz, et en amont à la sortie du module d'émission PE. L'interface d'injection I assure, suivant des techniques bien connues, l'injection de courants porteurs modulés par une trame représentant une information à transmettre sur le circuit de distribution S. Deux techniques de modulation bien connues peuvent être mises en oeuvre : il s'agit de la modulation de fréquence de type FSK ("Frequency Schift Key") et de la modulation d'amplitude de type ASK ("Amplitude Schift Key"). Dans le cas d'une modulation de type FSK, on rappelle, en référence à la figure 2, qu'à chaque valeur "O", "1" d'un bit à transmettre est associé un signal de fréquence prédéterminée f₀, f₁, ces deux fréquences étant suffisamment distinctes. Une trame est ainsi matérialisée par un signal d'amplitude constante et de fréquence prenant l'une des deux valeurs prédéterminées f₀, f₁ dans une juxtaposition de séquences de durée constante auxquelles sont associés les différents bits à transmettre. Ainsi, le chronogramme a) de la figure 2 illustre de façon simplifiée le signal injecté lors de la transmission d'une information numérique série 1011 illustrée sous forme logique sur le chronogramme b) de la figure 2 et telle qu'on peut la capter en entrée de l'interface d'injection I.

Lorsque le signal modulé est injecté sur le circuit de distribution électrique S, il devient alors disponible sur l'ensemble de ce circuit pour une réception par les stations de communication concernées. Mais si une autre station de communication entreprend simultanément une autre émission, un signal porteur résultant va apparaître sur la ligne et ne correspond plus au signal initial émis par la première station de communication émettrice.

Pour identifier cette situation et gérer ces collisions, l'unité de commande de ligne DL comprend en outre un dispositif de gestion 1 selon l'invention qui est constitué d'un module interface de réception IR directement couplé à l'interface d'injection I et reliée en entrée aux deux lignes de sortie de ladite interface d'injection I, d'un module de réception PR recevant du module interface de réception IR une information numérique obtenue par démodulation du signal Rₓ capté sur le circuit de distribution S, et d'un module de comparaison CE entre chaque bit émis et chaque bit reçu qui constitue un écho d'un bit émis.

Ce module de comparaison CE reçoit en entrée d'une part les bits transitant en série de l'unité de contrôle UC, par exemple un microprocesseur, vers le module d'émission PE et d'autre part les bits obtenus par démodulation du signal capté au point d'injection sur le circuit de distribution S, et délivre en outre un signal de détection de collision D à destination de l'unité de contrôle de protocole UC.

On dispose ainsi d'une détection de collision bit à bit. Le chronogramme c) de la figure 2 illustre à titre d'exemple un signal reçu en écho et perturbé par une collision entre plusieurs émissions. Ce signal conduit après démodulation à une information numérique 1010101 (chronogramme d)) manifestement différente de l'information numérique 1011 émise. A la première différence entre bit émis et bit reçu, le module de comparaison CE génère un signal de détection de collision. L'unité de contrôle UC entreprend alors l'exécution d'une étape de gestion de collision qui va réguler les différentes séquences d'émission jusqu'à ce qu'il n'y ait plus congestion du circuit de distribution S.

On peut aussi envisager une modulation d'amplitude de type ASK, en référence à la figure 3. Le chronogramme e) représente un signal émis selon cette modulation et correspondant à une information numérique 10101 (chronogramme f)). Dans l'exemple donné, à un bit "1" correspond une séquence d'amplitude non nulle et de fréquence fixe α, β, γ et à un bit "O" correspond une absence de signal. En cas de collision sur le circuit de distribution S, on peut obtenir comme signal résultant un signal perturbé illustré par le chronogramme g) et qui comprend par exemple des séquences α', γ' associées à des bits "1" plus longues que les séquences initiales correspondantes *α,* γ, la la séquence β' restant par exemple de durée identique à celle de la séquence initiale β.

Ceci a pour conséquence de créer des zones perturbées ZP sur l'information numérique reçue (chronogramme h)) qui peuvent conduire à des interprétations numériques erronées.

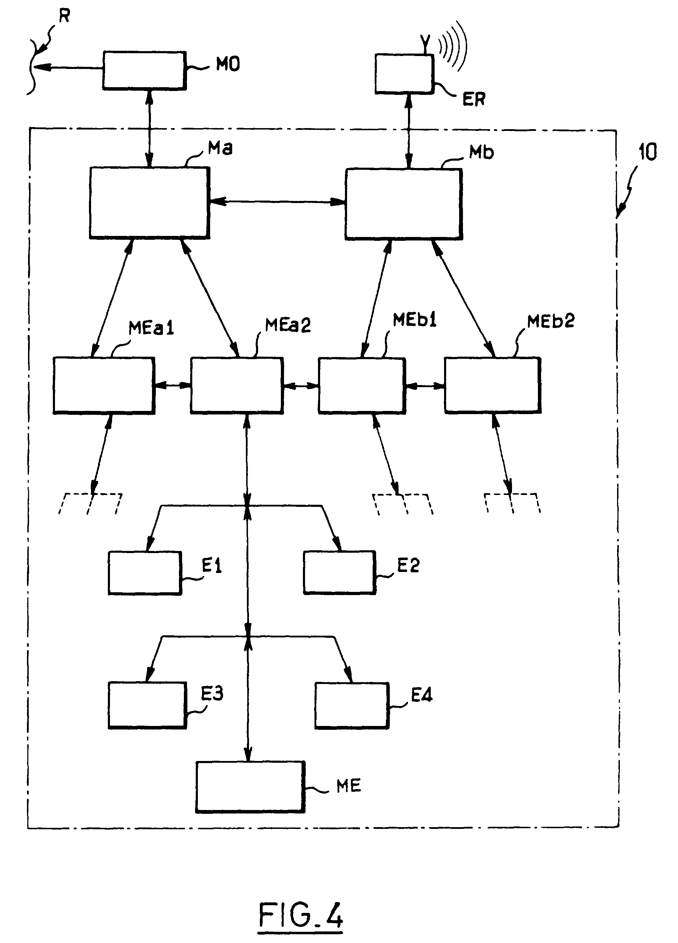

La structure hiérarchisée 10 d'un système de communication dans lequel est mis en oeuvre le procédé selon l'invention est représentée de façon simplifiée sur la figure 4 sur laquelle sont représentées les possibilités de communication entre les différents stations et les échanges d'informations entre ces stations, et non pas les liaisons matérielles qui ne sont en aucun cas directes entre station, puisque le secteur S constitue l'unique support matériel d'informations échangées entre station.

A titre d'exemple, la structure représentée comprend deux stations Maître Ma, Mb au sein d'une habitation, l'une des stations étant reliée à un réseau de communication extérieur R via une unité de modulation/démodulation MO et l'autre étant en communication avec des systèmes extérieurs de communication (non représentés) via une unité d'émission/réception ER, par exemple de type HF (haute fréquence).

Les deux stations Maître Ma, Mb constituent la première couche du système, la seconde couche étant constituée par des stations Maître-Esclave MEa1, MEa2 et MEb1, MEb2 qui peuvent communiquer entre elles, avec la station Maître Ma, Mb dont chacune dépend, et avec un ensemble de station Esclaves E1, E2, E3, E4 dépendant de chaque station Maître-Esclave et qui constituent la troisième couche du système.

A chaque station Maître Ma, Mb est associé un ensemble de stations Maître-Esclave MEa1, MEa2 et MEb1, MEb2, chaque station Maître-Esclave pouvant commander un ensemble de stations Esclave qui peuvent être également commandées par une autre station Maître-Esclave ME.

Il faut noter le caractère bidirectionnel des communications, d'une part entre les stations Maître et d'autre part, entre les stations Maître et les stations Maître-Esclave, et la nature exclusivement monodirectionnelle des communications entre les stations Maître-Esclave et les stations Esclave.

Par ailleurs, les techniques de modulation classiques par courants porteurs pourront être utilisées sans problème, notamment les modulations de type FSK ou ASK décrites précédemment.

De manière concrète, chaque station est matérialisée par un circuit de structure et de complexité dépendant de la nature de la station, qui est logé, soit directement au sein d'équipements à commander, soit au sein de modules de programmation spécifiques ou encore d'un poste de contrôle du système de communication.

On va maintenant décrire plus en détail la façon dont sont conditionnées les informations.

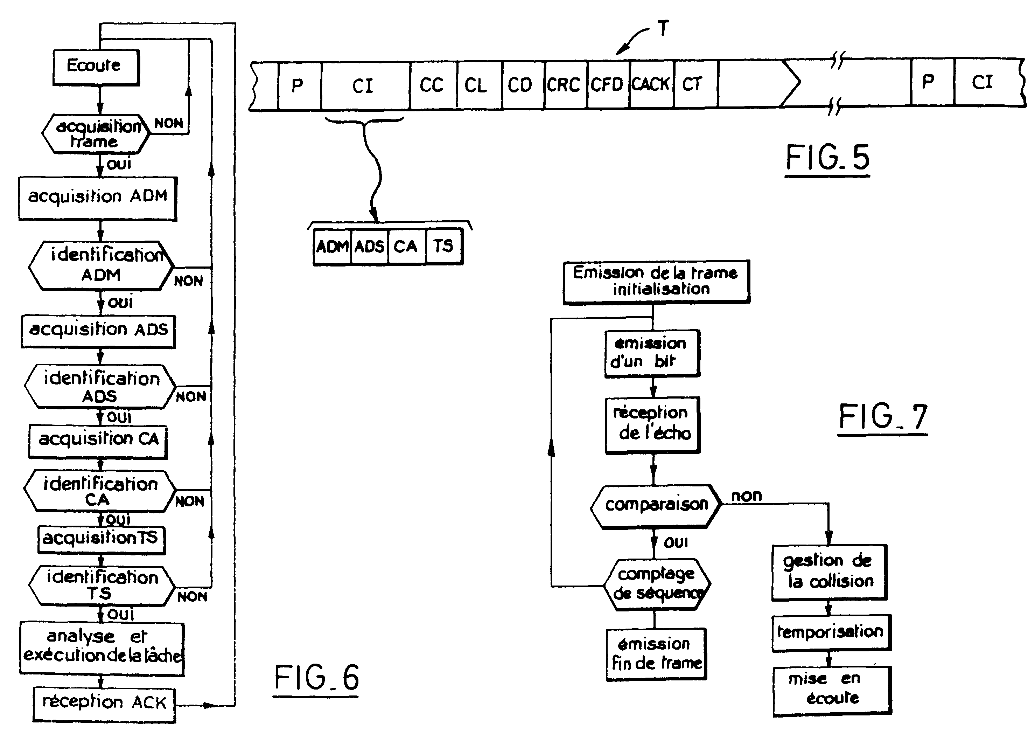

A chaque trame transmise T correspond, en référence à la figure 5, un préambule P, et la succession des champs énoncés ci-dessous :
- champ d'identification CI
- champ de contrôle CC
- champ de délimitation de données CL
- champ de données CD
- champ de codage CRC
- champ de fin de données CFD
- champ de reconnaissance CACK
- champ de fin de trame CT.

Il faut noter que le champ de codage CRC est constitué d'un polynôme de degré n, suivant une technique bien connue.

Le champ d'identification CI comprend lui-même :
- une adresse de la maison ADM
- une adresse de la station dans la maison ADS
- un code d'accès CA
- un code représentatif du type de station TS.

Au sein d'un système domotique mettant en oeuvre le procédé selon l'invention, chaque station Maître-Esclave ou Esclave se trouve en permanence en situation d'écoute sur le secteur, comme l'illustre l'organigramme de la figure 6.

Dès lors que l'existence d'une trame en superposition est détectée sur le secteur, une acquisition du champ d'adresse ADM est effectuée. Si cette adresse est précisément l'adresse de la maison dans laquelle est située la station en écoute, une acquisition du champ d'adresse de station ADS est entreprise avec pour objectif la détection d'une commande destinée à la station en écoute. Si c'est le cas, une acquisition du code d'accès CA est effectuée et permet de sécuriser la transmission d'un ordre à destination d'un équipement. L'acquisition suivante du type de station est une procédure supplémentaire d'identification.

A l'issue du traitement du champ d'identification, l'analyse du champ de commande CC et du champ de données CD et la conformité du champ CRC conduisent à l'exécution de la tache commandée. Après réception du champ de reconnaissance CACK, la transmission de la trame est terminée.

Dans le procédé selon l'invention, les stations du système qui sont conçues pour émettre des trames et plus généralement des informations sur le secteur, à savoir les stations Maître et les stations Maître-Esclave, assurent l'émission de ces informations suivant une procédure intégrant une détection de collision, en référence à la figure 7.

Après une étape préliminaire d'initialisation, chaque bit de la trame est émis sur le secteur et son écho est reçu puis comparé au bit émis. Si la comparaison indique une transmission correcte, le bit suivant de la trame est émis jusqu'à ce que l'ensemble de la trame soit émis. Lorsque le nombre de séquences correspondant au nombre total de bits de la trame est atteint, une étape d'émission de fin de trame est entreprise. Si la comparaison révèle une différence entre le bit émis et le bit reçu en écho, alors une étape de gestion de la collision ainsi détectée est entreprise. Elle conduit à une mise en écoute pendant une durée de temporisation prédéterminée qui permet de détecter l'état d'encombrement du secteur. Lorsque la ligne est de nouveau libre, une nouvelle émission de la trame est entreprise, en fonction d'un ordre de priorité prédéterminé entre stations émettrices.

A titre d'exemple d'application domotique du procédé selon l'invention, on peut citer un programme journalier incluant les séquences suivantes :
I) verrouillage des portes
II) surveillance d'un système d'alarme
III) réduction de la puissance de chauffage
IV) lecture de la consommation de fioul
V) réception d'un appel téléphonique
VI) mise en route d'équipement.

Les séquences I, II, III et IV précitées sont gérées par des stations Maître-Esclave spécifiques. La réception et le traitement d'appels téléphoniques sont effectués par la station Maître qui est reliée à un modem.

Chaque verrou électrique constitue une station Esclave. Il en est de même pour chaque capteur du système d'alarme, pour les différents éléments du système de chauffage et pour tout ou partie des équipement domestiques à commander.

Des commandes peuvent bien sûr être transmises à des stations Maître-Esclave par voies infrarouge ou hyperfréquence.

Bien entendu, l'invention n'est pas limitée aux exemples décrits et de nombreux aménagements peuvent être apportés à ces exemples sans sortir du cadre de l'invention.

Ainsi, on peut envisager d'autres types de modulation que les modulations par courants porteurs actuelles de type FSK ou ASK. De plus, le nombre de stations qui peuvent être gérées n'est pas limité par l'invention, mais uniquement par les capacités de traitement des stations Maître ou Maître-Esclave.

## Revendications

1. Procédé pour gérer des transmissions d'informations sur un circuit de distribution électrique (S), ces informations étant issues de plusieurs stations de communication (Ma, Mb, MEa1, MEa2, MEb1, MEb2) reliées audit circuit de distribution électrique (S) et étant émises par injection de courants porteurs sur ce dernier sous la forme de trames (T) comprenant un nombre prédéterminé de bits émis séquentiellement, caractérisé en ce qu'il comprend une étape de détection de collision effectuée au cours de l'émission de chaque bit et comportant une sous-étape de réception d'un bit en écho au bit émis et une sous-étape de comparaison dudit bit en écho avec le bit émis, suivie en cas de détection d'une collision, d'une étape de gestion de collision au cours de laquelle les stations impliquées dans ladite collision sont mises en situation d'écoute d'une succession d'informations émises sur le circuit de distribution électrique respectivement par les autres stations de communication suivant un ordre de priorité prédéterminé.

2. Procédé selon la revendication 1, caractérisé en ce qu'au cours de l'étape de gestion de collision, celle des autres stations qui est d'ordre de priorité immédiatement inférieur à celui de la station de communication en cours d'émission sur le circuit de distribution électrique (S), est soumise à une étape de temporisation de durée sensiblement égale à la durée de transmission d'une trame (T) .

3. Procédé selon la revendication 2, caractérisé en ce qu'au cours de l'étape de gestion de collision, si une information émise par lesdites autres stations de communication concerne l'une des stations impliquées dans la collision, cette station exécute les ordres ou commandes éventuellement inclus dans ladite information.

4. Procédé selon la revendication 3, caractérisé en ce qu'au cours de l'étape de gestion de collision, les autres stations de communication qui ne sont pas en cours d'émission, sont mises en situation d'écoute des informations circulant sur le circuit de distribution électrique et exécutent les ordres ou commandes éventuellement inclus dans les informations qui leur sont adressées.

5. Procédé selon l'une des revendications 2 à 4, caractérisé en ce que l'étape de gestion de collision prend fin lorsqu'il n'y a plus d'étape de temporisation en cours d'exécution.

6. Dispositif pour gérer des transmissions d'informations sur un circuit de distribution électrique (S), ces informations étant issues de plusieurs stations de communication (Ma, Mb, MEa1, MEa2, MEb1, MEb2) reliées audit circuit de distribution électrique (S) et étant émises par injection de courants porteurs sur ce dernier sous la forme de trames (T) comprenant un nombre prédéterminé de bits émis séquentiellement, mettant en oeuvre le procédé selon les revendications précédentes, caractérisé en ce qu'il comprend des moyens (PR, CE) pour détecter une collision d'informations sur le circuit de distribution électrique (S), coopérant avec des moyens (PE) pour émettre sur ledit circuit (S) des informations délivrées par des moyens de contrôle (UC), les moyens de détection de collision comprenant des moyens (PR, CE) pour recevoir chaque bit reçu en écho à l'émission d'un bit par les moyens d'émission (PE) et des moyens (CE) pour comparer ce bit reçu en écho avec le bit émis, et délivrant un signal de détection de collision (D) en cas de différence, ce signal étant fourni aux moyens de contrôle (UC) en vue d'initier une étape de gestion de collision.

7. Dispositif selon la revendication 6, caractérisé en ce que les moyens d'émission (PE) sont reliés au circuit de distribution électrique (S) via des moyens d'interface d'émission et en ce que les moyens de réception (PR) sont reliés audit circuit de distribution électrique (S) via des moyens d'interface de réception (IR), lesdits moyens d'interface d'émission et d'interface de réception étant regroupés au sein d'une interface d'injection (I).

8. Application du procédé selon les revendications 1 à 5 aux communications dans un système domotique (10) comprenant plusieurs stations de communication (Ma, Mb, MEa1, MEa2, MEb1, MEb2) reliées à un circuit de distribution électrique (S), ces stations de communication (Ma, Mb, MEa1, MEa2, MEb1, MEb2) communicant par transmission d'informations sur ce circuit de distribution électrique (S), les dites informations étant émises par injection de courants porteurs sous la forme de trames (T) comprenant un nombre prédéterminé de bits émis séquentiellement.

## Patentansprüche

1. Verfahren zum Verwalten der Datenübertragungen in einem Verteilerstromkreis (S), wobei diese Daten von mehreren Kommunikationsstationen (Ma, Mb, MEa1, MEa2, MEb1, MEb2) ausgesandt werden, die an diesen Verteilerstromkreis (S) angeschlossen sind, und durch Einbringen von Trägerströmen in letzteren eingegeben werden, und zwar in Form von Rastern (T), die eine vorbestimmte Anzahl sequentiell ausgegebener Bits umfassen, dadurch gekennzeichnet, daß es einen Kollisionserkennungsschritt aufweist, der während der Ausgabe jedes Bits durchgeführt wird und einen Teilschritt zum Empfang eines Bits als Echo auf das gesandte Bit und einen Teilschritt zum Vergleich dieses Echo-Bits mit dem ausgegebenen Bit aufweist, dem im Falle der Erkennung einer Kollision ein Kollisionssteuerungsschritt folgt, während dessen die in diese Kollision verwickelten Stationen in die Lage versetzt werden, eine Folge von in den Stromkreis bzw. von den anderen Kommunikationsstationen gesandten Daten in einer vorbestimmten Rangfolge abzuhören.

2. Verfahren nach Anspruch 1, dadurch gekennzeichnet, daß während des Kollisionssteuerungsschritts die Kollisionssteuerung der anderen Stationen, die in der Rangfolge direkt nach der der Kommunikationsstation kommt, die gerade im Stromkreis (S) sendet, zu einem Verzögerungsschritt von einer Länge, die im wesentlichen der Dauer der Übermittlung eines Rasters (T) entspricht, gezwungen wird.

3. Verfahren nach Anspruch 2, dadurch gekennzeichnet, daß, wenn während des Kollisionssteuerungsschritts eine von den anderen Kommunikationsstationen ausgegebene Information eine der in die Kollision verwickelten Stationen betrifft, diese Station die eventuell in dieser Information enthaltenen Befehle oder Anweisungen ausführt.

4. Verfahren nach Anspruch 3, dadurch gekennzeichnet, daß die anderen Kommunikationsstationen, die gerade nicht senden, während des Kollisionssteuerungsschritts in die Lage versetzt werden, Informationen abzuhören, die in dem Stromkreis zirkulieren, und die Befehle oder Anweisungen ausführen, die eventuell in den an sie adressierten Informationen enthalten sind.

5. Verfahren nach einem der Ansprüche 2 bis 4, dadurch gekennzeichnet, daß der Kollisionssteuerungsschritt beendet wird, wenn kein Verzögerungsschritt mehr in Ausführung begriffen ist.

6. Vorrichtung zum Verwalten von Datenübertragungen in einem Stromverteilerkreis (S), wobei diese Daten von mehreren Kommunikationsstationen (Ma, Mb, MEa1, MEa2, MEb1, MEb2) ausgesandt werden, die an diesen Stromversorgungskreis (S) angeschlossen sind, und durch Einbringen von Trägerströmen in letzteres gesandt werden, und zwar in Form von Rastern (T), die eine vorbestimmte Anzahl sequentiell ausgegebener Bits umfassen, die das Verfahren der Erfindung nach den vorstehenden Ansprüchen anwendet, dadurch gekennzeichnet, daß sie Vorrichtungen (PR, CE) zum Erkennen von Datenkollisionen in dem Stromnetz (S) aufweist und mit Vorrichtungen (PE) zusammenwirkt, um in diesem Stromkreis (S) Informationen zu senden, die von Kontrollvorrichtungen (UC) ausgegeben werden, wobei die Kollisionserkennungsvorrichtungen Vorrichtungen (PR, CE) zum Empfang jedes als Echo auf das Senden eines von den Sendevorrichtungen (PE) gesandten Bits empfangenen Bits sowie Vorrichtungen (CE) aufweisen, die dieses als Echo empfangene Bit mit den gesandten Bits vergleicht und im Abweichungsfall ein Kollisionserkennungssignal (D) ausgeben, wobei dieses Signal an die Kontrollvorrichtungen (UC) gesandt wird, um einen Kollisionssteuerungsschritt einzuleiten.

7. Vorrichtung nach Anspruch 6, dadurch gekennzeichnet, daß die Sendevorrichtungen (PE) über Schnittstellensendevorrichtungen und die Empfangsvorrichtungen (PR) über Schnittstellenempfangsvorrichtungen (IR) an den Stromkreis (S) angeschlossen sind, wobei diese Schnittstellensende- und -empfangsvorrichtungen in einer Einbringschnittstelle (I) zusammengefaßt sind

8. Anwendung des Verfahrens nach den Ansprüchen 1 bis 5 auf die Kommunikationsvorgänge in einem Hausnetz (10) umfassend mehrere Kommunikationsstationen (Ma, Mb, MEa1, MEa2, MEb1, MEb2), die an einen Stromkreis (S) angeschlossen sind, wobei diese Kommunikationsstationen (Ma, Mb, MEa1, MEa2, MEb1, MEb2) durch Datenübertragung in diesem Stromkreis (S) kommunizieren und die genannten Daten durch Einbringen von Trägerströmen in Form von Rastern (T), die eine vorbestimmte Anzahl sequentiell ausgegebener Bits umfassen, gesandt werden.

## Claims

1. Method for managing information transmission on an electrical distribution circuit (S), this information coming from several communication stations (Ma, Mb, MEa1, MEa2, MEb1, MEb2) connected to the said electrical distribution circuit (S) and being sent by injecting carrier currents on the latter in the form of frames (T) comprising a predetermined number of bits sent sequentially, characterized in that it comprises a collision detection step performed during the sending of each bit and including a sub-step for receiving a bit echoing the bit sent and a sub-step for comparing the said echoing bit with the bit sent, followed, if a collision is detected, by a collision management step during which the stations involved in the said collision are set to monitor a series of items of information sent respectively on the electrical distribution circuit by the other communication stations in a predetermined order of priority.

2. Method according to Claim 1, characterized in that, during the collision management step, the station amongst the other stations whose order of priority is immediately below that of the communication station in the process of transmitting on the electrical distribution circuit (S), is subjected to a time delay step whose duration is substantially equal to the time taken to transmit a frame (T).

3. Method according to Claim 2, characterized in that, during the collision management step, if an item of information sent by the said other communication stations concerns one of the stations involved in the collision, this station executes any instructions or commands included in the said information.

4. Method according to Claim 3, characterized in that, during the collision management step, the other communication stations which are not in the process of transmitting are set to monitor information circulating on the electrical distribution circuit and execute any instructions or commands included in the information sent to them.

5. Method according to one of Claims 2 to 4, characterized in that the collision management step ends when there is no longer a time delay step taking place.

6. Device for managing information transmission on an electrical distribution circuit (S), this information coming from several communication stations (Ma, Mb, MEa1, MEa2, MEb1, MEb2) connected to the said electrical distribution circuit (S) and being sent by injecting carrier currents on the latter in the form of frames (T) comprising a predetermined number of bits sent sequentially, using the method according to the preceding claims, characterized in that it comprises means (PR, CE) for detecting an information collision on the electrical distribution circuit (S), cooperating with means (PE) for sending on the said circuit (S) information delivered by control means (UC), the collision detection means comprising means (PR, CE) for receiving each bit received as an echo of the transmission of a bit by the transmission means (PE) and means (CE) for comparing this bit received as an echo with the bit sent, and delivering a collision detection signal (D) in the event of a difference, this signal being supplied to the control means (UC) with a view to initiating a collision management step.

7. Device according to Claim 6, characterized in that the transmission means (PE) are connected to the electrical distribution circuit (S) via transmission interface means and in that the reception means (PR) are connected to the said electrical distribution circuit (S) via the reception interface means (IR), the said transmission interface and reception interface means being included within an injection interface (I).

8. Application of the method according to Claims 1 to 5 to communications in a home automation system (10) comprising several communication stations (Ma, Mb, MEa1, MEa2, MEb1, MEb2) connected to an electrical distribution circuit (S), these communication stations (Ma, Mb, MEa1, MEa2, MEb1, MEb2) communicating by transmitting information on this electrical distribution circuit (S), the said information being sent by injecting carrier currents in the form of frames (T) comprising a predetermined number of bits sent sequentially.
